Europäisches Patentamt

European Patent Office

Office européen des brevets

(11) Numéro de publication: **0 007 925**
**A1**

(12) # DEMANDE DE BREVET EUROPEEN

(21) Numéro de dépôt: **78200132.5**

(22) Date de dépôt: **07.08.78**

(51) Int. Cl.³: **B 23 K 11/30**

(43) Date de publication de la demande: **20.02.80**
**Bulletin 80/4**

(84) Etats contractants désignés: **BE CH DE FR GB SE**

(71) Demandeur: **Société Anonyme dite ELPHIAC,
54, Chaussée de Charleroi, B-1060 Bruxelles (Saint-
Gilles) (BE)**

(72) Inventeur: **Cuvelier, Michel, 20, rue Eracle, B-4000
Liege (BE)**

(74) Mandataire: **Bossard, Franz, ACEC - Service des
Brevets Boîte Postale 4, B-6000 Charleroi (BE)**

(54) **Installation de traitement thermique à température élevée de matières à traiter au défilé.**

(57) Installation de traitement thermique à température élevée de matières à traiter au défilé comprenant des paires de galets (2. 3) dans laquelle, dans le but d'obtenir un refroidissement efficace des galets, ces dernières sont surmontées de couronnes (5, 13) définissant chacune un récipient ouvert alimenté par un dispositif de distribution d'un liquide de refroidissement (7. 8). De plus, les galets sont percés de trous passant du fond du récipient à la face supérieure du galet (2,3) vers la face inférieure de celui-ci.

# INSTALLATION DE TRAITEMENT THERMIQUE A TEMPÉRATURE ÉLEVÉE DE MATIÈRES À TRAITER AU DÉFILÉ.

La présente invention a pour objet une installation de traitement thermique à température élevée de matières à traiter au défilé, comprenant au moins une paire de galets à axes approximativement verticaux. Une telle installation sert par exemple au soudage de tubes à cordon de soudure longitudinal, à partir d'un ruban de tôle. L'invention est particulièrement avantageuse lorsque la source de chaleur produisant la température élevée dans la matière à traiter se trouve à proximité d'une paire de galets, spécialement si la source de chaleur est un inducteur alimenté en courants alternatifs à haute, moyenne ou basse fréquence.

Dans de telles installations, il est indispensable de refroidir les galets exposés à la chaleur. Généralement cela peut se faire soit par soufflage avec un gaz approprié tel que l'air comprimé, soit par arrosage au moyen d'un liquide de refroidissement. Notamment, lorsque ce liquide est de l'eau, il se peut que la matière à traiter doit être tenue à l'abri de l'arrosage. D'autre part il s'agit de ne pas sacrifier un refroidissement particulièrement efficace des galets, tout en offrant une garantie maximum de protéger la matière à traiter du contact avec le liquide de refroidissement.

Une installation de traitement thermique à température élevée de matièresà traiter au défilé, comprenant au moins une paire de galets à axes approximativement verticaux est caractérisée, selon l'invention, en ce que les galets sont surmontés de couronnes définissant chacune un récipient ouvert, en ce que les galets sont percés chacun d'au moins un trou passant du fond du récipient à la face supérieure du galet vers la face opposée, inférieure de celui-ci, et en ce qu'un dispositif de distribution d'un liquide de refroidissement alimente les dits récipients avec des quantités de liquide suffisantes pour maintenir toujours un niveau minimum de liquide dans chaque récipient qui se vide continuellement par le trou ou les trous dans le fond.

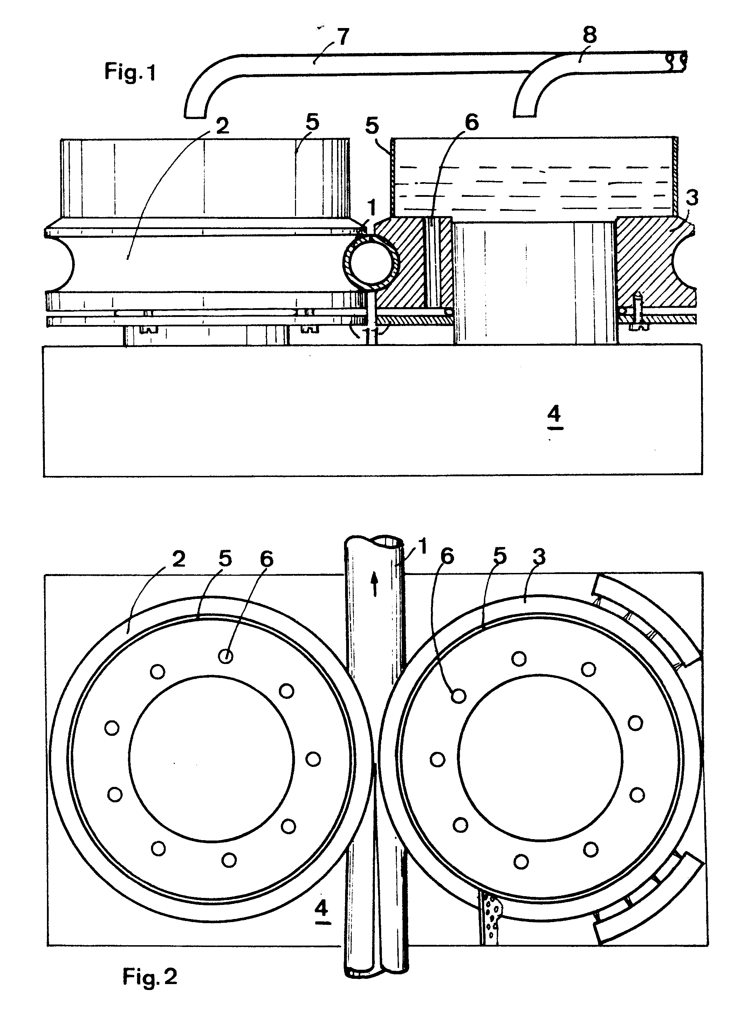

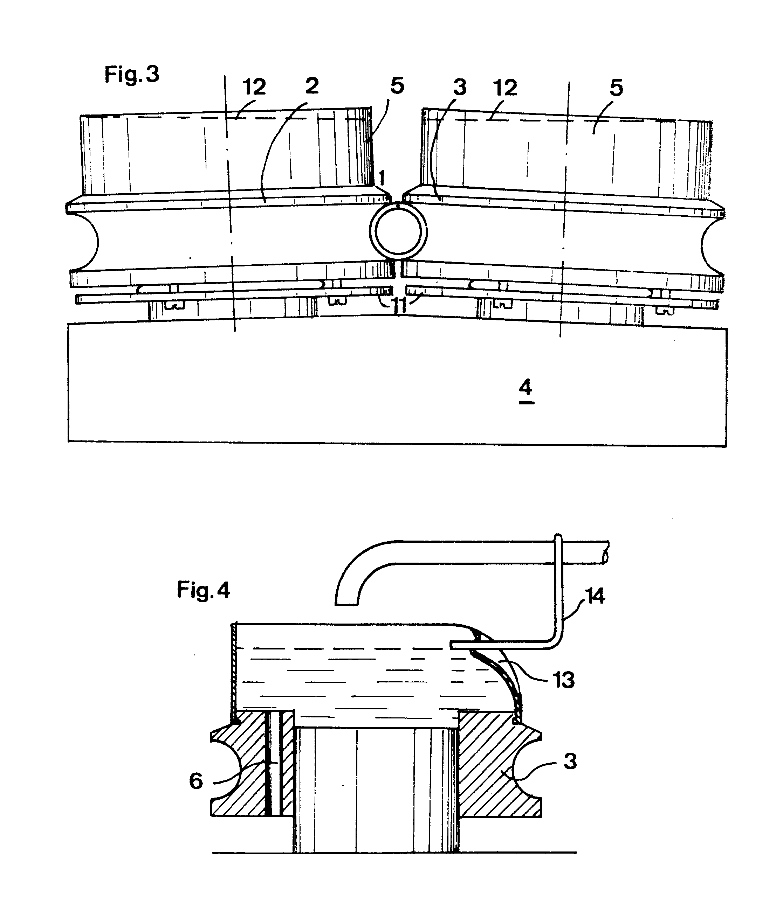

L'invention est expliquée ci-dessous par rapport à un exemple d'une forme d'exécution et de quelques variantes de celui-ci, représentés au dessin annexé. Dans ce dessin les figures 1 et 2 représentent une coupe en élévation et une vue en plan d'une partie d'une installation suivant l'invention . La figure 3 est une variante de la figure 1 et la figure 4 une variante d'une partie de la figure 1.

A la figure 1, une installation de soudage de tubes à cordon de soudure longitudinal est montrée en coupe. Un tube 1 formé à partir d'un ruban de tôle passe entre deux galets de soudage 2 et 3 à axes verticaux. Le cordon de soudure du tube est situé entre les deux galets 2 et 3, à la partie supérieure. Les deux galets 2 et 3 sont maintenus dans un bâti 4 et entraînés par un équipage moteur non représenté. Les deux galets 2 et 3 sont surmontés chacun d'une couronne cylindrique 5 et percés de plusieurs trous 6 en l'occurence neuf. Les couronnes cylindriques 5 peuvent aussi avoir, d'autres formes, par exemple, une forme conique soit en s'évasant, soit en se rétrécissant vers le dessus. Un dispositif distributeur de liquide de refroidissement, non représenté est raccordé à des tubes distributeurs 7 et 8 dont l'un alimente le réservoir au dessus du galet 2 et l'autre le récipient au dessus du galet 3 en liquide de refroidissement, en l'occurrence de l'eau. Le débit de de liquide est de préférence réglé de telle manière que le niveau de liquide dans chaque réservoir défini par une couronne 5 atteigne une valeur minimum prédéterminée, compte tenu de la vitesse d'écoulement à travers les trous 6. Comme l'eau s'écoule plus vite, si ce niveau augmente, il est possible d'atteindre facilement une certaine stabilisation de ce niveau et d'éviter qu'un réservoir défini par une couronne 5 ne déborde ou se vide complètement à la moindre irrégularité de fonctionnement, par exemple suite à des variations anormales du débit d'alimentation par les tubes distributeurs 7 et 8.

Il est évidemment possible de procéder en outre à un arrosage bien connu des galets, par exemple, comme cela est montré pour le galet 3, au moyen de douches 9 mais de prévoir une patte d'essuiage 10 garnie de feutres ou d'une éponge pour éviter le mouillage du tube 1 à souder.

Le grand nombre de trous le long de la périphérie permet d' assurer un refroidissement extrêmement efficace des galets 2 et 3. On a avantage d'approcher les trous 6 aussi près que possible de la gorge des galets et de prévoir un grand nombre de trous. Il faut néanmoins veiller à ne pas affaiblir la rigidité mécanique des galets.

Pour augmenter davantage l'efficacité du refroidissement, il est possible de fixer aux faces inférieures des galets 2 et 3 et à une certaine distance de ces faces inférieures des disques 11 qui obligent l'eau qui s'écoule par les trous 6 de longer les faces inférieures des galets 2 et 3 et de s'échapper seulement le long des périphéries inférieures.

Lorsque de toute manière le débordement accidentel des récipients définis par les couronnes 5 est à craindre, ou lorsqu'on désire de toute façon laisser déborder continuellement ces récipients, il est possible d'incliner légèrement les axes des galets 2 et 3 de telle manière que leurs axes se rejoignent en un point en dessous des galets comme cela est montré à la figure 3 grâce aux niveaux de liquide 12. Le débordement des récipients a alors lieu sur les côtés opposés à ceux où les galets touchent le tube 1.

Un autre moyen pour permettre le débordement d'un récipient est montré à la figure 4. Suivant cette variante la couronne est réalisée en un manchon souple 13 par exemple en caoutchouc, ou en tôle fine dont le bord supérieur est abaissé à l'aide d'un doigt 14 maintenu en un endroit fixe.

Il est évident qu'en cas de débordement du liquide de refroidissement, il est toujours avantageux d'utiliser une patte d'essuiage à un endroit de la périphérie du galet immédiatement en amont de l'endroit où le galet entre en contact avec la matière à traiter.

## REVENDICATIONS

1. Installation de traitement thermique à température élevée de matières à traiter au défilé comprenant au moins une paire de galets (2,3) à axes approximativement verticaux,

caractérisée en ce que les galets (2,3) sont surmontés de couronnes (5,13) définissant chacune un récipient ouvert, en ce que les galets (2,3) sont percés chacun d'au moins un trou (6) passant du fond du récipient à la face supérieure du galet (2,3) vers la face opposée, inférieure de celui-ci, et en ce qu'un dispositif de distribution d'un liquide de refroidissement (7,8) alimente les dits récipients avec des quantités de liquide suffisantes pour maintenir toujours un niveau minimum de liquide dans chaque récipient qui se vide continuellement par le trou ou les trous dans le fond.

2. Installation suivant la revendication 1 caractérisée en ce que les axes des galets (2,3) sont inclinés et se rejoignent en un point en dessous des galets (2,3).

3. Installation suivant la revendication 1 caractérisée en ce que la couronne (13) est en un matériau souple et en ce que des moyens (14) sont prévus à un endroit fixe pour déformer cette couronne en vue d'abaisser son bord.

4. Installation suivant une des revendications précédente, caractérisée en ce que un disque (11) est fixé à la face inférieure du galet (2,3) et à une certaine distance de cette face inférieure.

Fig. 1

Fig. 2

Fig. 3

12    2    5    3    12    5

1

11

4

Fig. 4

14

13

6    3

Office européen des brevets

**RAPPORT DE RECHERCHE EUROPEENNE**

0007925

Numéro de la demande

**EP 78 20 0132**

## DOCUMENTS CONSIDERES COMME PERTINENTS

| Catégorie | Citation du document avec indication, en cas de besoin, des parties pertinentes | Revendica-tion concernee |
|---|---|---|
| | <u>DE - C - 296 607</u> (PFRETZSCHNER)<br>* Page 1, lignes 43-71 *<br>-- | 1 |
| | <u>DE - C - 756 807</u> (STARRBAU)<br>* Page 2, lignes 61-110 *<br>-- | 1 |
| | <u>US - A - 2 009 501</u> (REPUBLIC STEEL)<br>* Figure 1; page 2, colonne de gauche, lignes 57-74 *<br>---- | 2 |

**CLASSEMENT DE LA DEMANDE (Int. Cl.²)**

B 23 K 11/30

**DOMAINES TECHNIQUES RECHERCHES (Int. Cl.²)**

B 23 K 11/30
11/06
11/08

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 14-02-1979 | HOORNAERT |

OEB Form 1503.1 06.78